# EUROPEAN PATENT APPLICATION

(11) **EP 4 498 588 A1**
(43) Date of publication of application: **29.01.2025**
(21) Application number: 24187310.8
(22) Date of filing: 09.07.2024
(51) Int. Cl.: H02M 1/42, H02M 1/12, H02M 5/458

(54) **POWER CONDITIONING SYSTEMS AND METHODS OF OPERATING A LOAD-CONDITIONING SYSTEM**

(30) Priority: 28.07.2023 IN 202311051023
(71) Applicant: Schneider Electric IT Corporation, Foxboro, MA 02035 (US)
(72) Inventor: BHISE, Kapil Sunil, FOXBORO, 02035 (US); CHAN, Pin-Chieh, FOXBORO, 02035 (US); LEE, Kuo-Liang, FOXBORO, 02035 (US); CHANG, Ming-Chieh, FOXBORO, 02035 (US); NAGABHUSHANRAO, Pradeep Tolakanahalli, FOXBORO, 02035 (US); KLIKIC, Damir, FOXBORO, 02035 (US); CHIANG, Hsuang-Chang, FOXBORO, 02035 (US)
(74) Representative: Plasseraud IP

(57) **Abstract**

Examples of the disclosure include a power-conditioning system comprising a load output configured to be coupled to a load, a power-factor-correction circuit (PFC) comprising a first switching leg and a second switching leg, wherein the first switching leg and the second switching leg are configured to be controlled based on a first modulation index, an inverter comprising the second switching leg and a third switching leg, wherein the third switching leg is configured to be controlled based on a second modulation index, and a capacitor coupled to an inverter output of the inverter and being coupled in series with the load output.

## Description

### BACKGROUND

### Field of the Disclosure

At least one example in accordance with the present disclosure relates generally to uninterruptible power supplies.

### Discussion of Related Art

Power devices, such as uninterruptible power supplies (UPSs), may be used to provide regulated, uninterrupted power for sensitive and/or critical loads, such as computer systems and other data-processing systems. Existing UPSs include online UPSs, offline UPSs, line-interactive UPSs, as well as others. UPSs may provide output power to a load. The output power may be derived from a primary source of power, such as a utility-mains source, and/or derived from a back-up source of power, such as an energy-storage device.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a block diagram of an uninterruptible power supply system according to an example;
FIG. 2 illustrates a schematic diagram of power-conversion circuitry according to an example.
FIG. 3 illustrates a schematic diagram of power-conversion circuitry according to another example;
FIG. 4 illustrates a block logic control diagram according to an example;
FIG. 5 illustrates switching-signal graphs according to an example;
FIG. 6 illustrates graphs depicting a change in modulation-index signals in response to a change in input-voltage conditions according to an example;
FIG. 7 illustrates graphs of control signals provided to switching legs according to an example;
FIG. 8 illustrates a schematic diagram of power-conversion circuitry according to another example;
FIG. 9 illustrates a schematic diagram of power-conversion circuitry according to another example; and
FIG. 10 illustrates a schematic diagram of power-conversion circuitry according to another example.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

As discussed above, uninterruptible power supplies (UPSs) may provide uninterrupted power to one or more loads. UPSs may receive input power from at least one primary power source, such as a utility mains and from at least one secondary power source, such as an energy-storage device. Some types of UPSs may provide additional functionality. For example, line-interactive UPSs may interact with primary input power (for example, utility-mains power) by drawing or injecting power between the utility mains and the one or more loads.

At least one example of the disclosure provides a line-interactive UPS with improved efficiency. In various examples, a line-interactive UPS is provided by combining a power-factor-correction circuit (PFC) topology and a series-active-filter inverter topology. A capacitor may be coupled in series with a load of the UPS. The PFC and/or the inverter may be operated to maintain a desired voltage across the capacitor. A voltage across the capacitor may be varied to account for, for example, changes in the input voltage received from a utility mains.

The principles of the disclosure may be applicable to various types of power devices having a combined PFC-and-series-active-filter-inverter topology. For purposes of explanation, the following examples are provided with respect to an uninterruptible power supply. However, the principles of the disclosure may be applicable to other types of power devices.

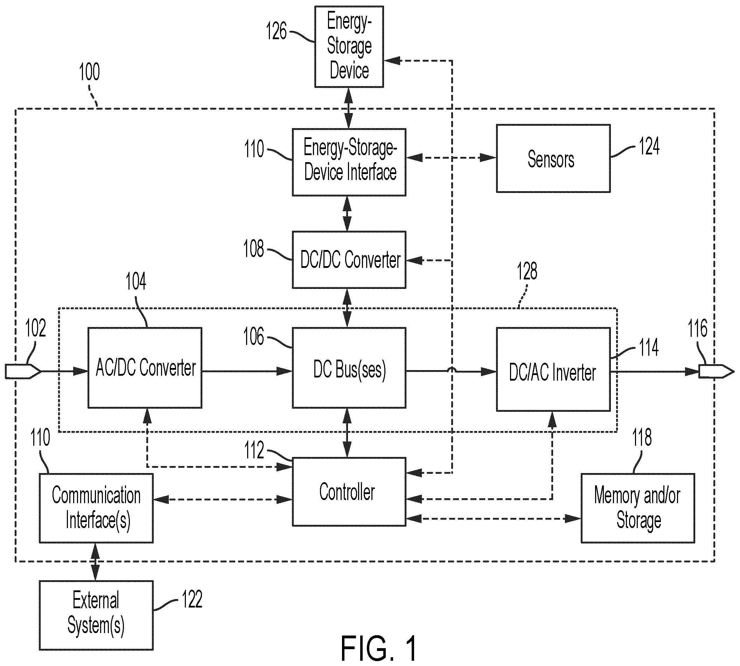

FIG. 1 is a block diagram of a UPS 100 according to an example. The UPS 100 includes an input 102, an AC/DC converter 104, one or more DC busses 106, a DC/DC converter 108, an energy-storage-device interface 110, at least one controller 112 ("controller 112"), a DC/AC inverter 114, an output 116, a memory and/or storage 118, one or more communication interfaces 120 ("communication interfaces 120"), which may be communicatively coupled to one or more external systems 122 ("external systems 122"), and one or more voltage sensors and/or current sensors 124 ("sensors 124").

The input 102 is coupled to the AC/DC converter 104 and to an AC power source (not pictured), such as an AC mains power supply. The AC/DC converter 104 is coupled to the input 102 and to the one or more DC busses 106 and is communicatively coupled to the controller 112. The one or more DC busses 106 are coupled to the AC/DC converter 104, the DC/DC converter 108, and to the DC/AC inverter 114, and are communicatively coupled to the controller 112. The DC/DC converter 108 is coupled to the one or more DC busses 106 and to the energy-storage-device interface 110 and is communicatively coupled to the controller 112. The energy-storage-device interface 110 is coupled to the DC/DC converter 108 and is configured to be coupled to at least one energy-storage device 126 and/or another energy-storage device. In some examples, the energy-storage-device interface 110 is configured to be communicatively coupled to the controller 112.

In some examples, the UPS 100 may be external to the at least one energy-storage device 126 and may be coupled to the at least one energy-storage device 126 via the energy-storage-device interface 110. In various examples, the UPS 100 may include one or more energy-storage devices, which may include the energy-storage device 126. The energy-storage device 126 may include one or more batteries, capacitors, flywheels, or other energy-storage devices in various examples.

The DC/AC inverter 114 is coupled to the one or more DC busses 106 and to the output 116, and is communicatively coupled to the controller 112. The output 116 is coupled to the DC/AC inverter 114, and to an external load (not pictured). The controller 112 is communicatively coupled to the AC/DC converter 104, the one or more DC busses 106, the DC/DC converter 108, the energy-storage-device interface 110, the DC/AC inverter 114, the memory and/or storage 118, the communication interfaces 120, and/or the energy-storage device 126. The sensors 124 are communicatively coupled to the controller 112 and may be coupled to one or more other components of the UPS 100, such as the input 102, the AC/DC converter 104, the one or more DC busses 106, the DC/DC converter 108, the energy-storage-device interface 110, the DC/AC inverter 114, and/or the output 116.

The input 102 is configured to be coupled to an AC mains power source and to receive input AC power having an input voltage level. The UPS 100 is configured to operate in different modes of operation based on the input voltage of the AC power provided to the input 102. The controller 112 may determine a mode of operation in which to operate the UPS 100 based on whether the input voltage of the AC power is acceptable. The controller 112 may include or be coupled to one or more sensors, such as the sensors 124, configured to sense parameters of the input voltage. For example, the sensors 124 may include one or more voltage and/or current sensors coupled to the input 102 and being configured to sense information indicative of a voltage at the input 102 and provide the sensed information to the controller 112.

When AC power provided to the input 102 is acceptable (for example, by having parameters, such as an input voltage value, that meet specified values, such as by falling within a range of acceptable input voltage values), the controller 112 controls components of the UPS 100 to operate in a normal mode of operation. In the normal mode of operation, AC power received at the input 102 is provided to the AC/DC converter 104. The AC/DC converter 104 converts the AC power into DC power and provides the DC power to the one or more DC busses 106. The one or more DC busses 106 distribute the DC power to the DC/DC converter 108 and to the DC/AC inverter 114. The DC/DC converter 108 converts the received DC power and provides the converted DC power to the energy-storage-device interface 110. The energy-storage-device interface 110 receives the converted DC power, and provides the converted DC power to the energy-storage device 126 to charge the energy-storage device 126. The DC/AC inverter 114 receives DC power from the one or more DC busses 106, converts the DC power into regulated AC power, and provides the regulated AC power to the output 116 to be delivered to a load.

When AC power provided to the input 102 from the AC mains power source is not acceptable (for example, by having parameters, such as an input voltage value, that do not meet specified values, such as by falling outside of a range of acceptable input voltage values), the controller 112 controls components of the UPS 100 to operate in a backup mode of operation. In the backup mode of operation, DC power is discharged from the energy-storage device 126 to the energy-storage-device interface 110, and the energy-storage-device interface 110 provides the discharged DC power to the DC/DC converter 108. The DC/DC converter 108 converts the received DC power and distributes the DC power amongst the one or more DC busses 106. For example, the DC/DC converter 108 may evenly distribute the power amongst the one or more DC busses 106. The one or more DC busses 106 provide the received power to the DC/AC inverter 114. The DC/AC inverter 114 receives the DC power from the one or more DC busses 106, converts the DC power into regulated AC power, and provides the regulated AC power to the output 116.

In some examples, the sensors 124 may include one or more sensors coupled to one or more of the foregoing components such that a voltage and/or current of one or more of the foregoing components may be determined by the controller 112. The controller 112 may store information in, and/or retrieve information from, the memory and/or storage 118. For example, the controller 112 may store information indicative of sensed parameters (for example, input-voltage values of the AC power received at the input 102) in the memory and/or storage 118. The controller 112 may further receive information from, or provide information to, the communication interfaces 120. The communication interfaces 120 may include one or more communication interfaces including, for example, user interfaces (such as display screens, touch-sensitive screens, keyboards, mice, track pads, dials, buttons, switches, sliders, light-emitting components such as light-emitting diodes, sound-emitting components such as speakers, buzzers, and so forth configured to output sound inside and/or outside of a frequency range audible to humans, and so forth), wired communication interfaces (such as wired ports), wireless communication interfaces (such as antennas), and so forth, configured to exchange information with one or more systems, such as the external systems 122, or other entities, such as human beings. The external systems 122 may include any device, component, module, and so forth, that is external to the UPS 100, such as a server, database, laptop computer, desktop computer, tablet computer, smartphone, central controller or data-aggregation system, other UPSs, and so forth.

In some examples, the UPS 100 may also be operated in a line-interactive mode of operation. In the line-interactive mode of operation, input power is received at the input 102 and provided to the output 116, and may at least partially bypass the AC/DC converter 104, the DC busses 106, and the DC/AC inverter 114 (collectively referred to as power-conversion circuitry 128) in some topologies. In addition, the power-conversion circuitry 128 may supplement the input power as necessary, such as by injecting or drawing power to provide conditioned power (for example, power having a constant voltage despite changes in input-power voltage) to the load coupled to the output 116.

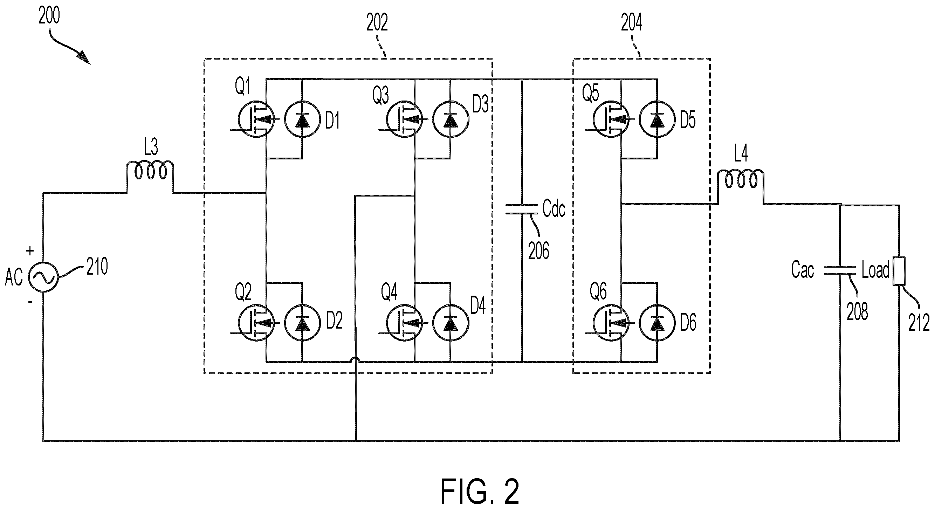

FIG. 2 illustrates a schematic diagram of power-conversion circuitry 200 according to an example. The power-conversion circuitry 200 may be an example of the power-conversion circuitry 128. The power-conversion circuitry 200 includes a PFC 202, an inverter 204, a DC-power capacitor 206, and an AC-power capacitor 208, and is coupled to an input-power source 210 and a load 212. The PFC 202 includes four PFC switching devices. The inverter 204 includes two inverter switching devices. In some examples, the DC-power capacitor 206 may be considered a component of the PFC 202, and the AC-power capacitor 208 may be considered a component of the inverter 204.

The input-power source 210 is coupled to the PFC 202. The PFC 202 is coupled to the input-power source 210, the inverter 204, and the DC-power capacitor 206. The inverter 204 is coupled to the PFC 202, the DC-power capacitor 206, the AC-power capacitor 208, and the load 212. The DC-power capacitor 206 is coupled to the PFC 202 and the inverter 204. The AC-power capacitor 208 is coupled to the inverter 204 and is coupled in parallel with the load 212. The load 212 is coupled to the inverter 204 and the AC-power capacitor 208. In various examples, the PFC 202, the inverter 204, and the DC-power capacitor 206 may also be coupled (not illustrated) to one or more energy-storage devices via a DC/DC converter, such as the DC/DC converter 108.

The power-conversion circuitry 200 may be operated by a controller, such as the controller 112. In operation, the controller 112 operates the PFC 202 to draw AC power from the input-power source 210, convert the AC power to DC power, and provide the DC power to the DC-power capacitor 206. The controller 112 operates the inverter 204 to draw DC power from the DC-power capacitor 206, convert the DC power to AC power, and provide the AC power to the AC-power capacitor 208 and/or the load 212. The load 212 may draw the AC power from the AC-power capacitor 208 and/or the inverter 204.

The power-conversion circuitry 200 may effectively condition input power and thereby improve the quality of power provided to the load 212. However, because the power-conversion circuitry performs double-conversion of the input power (that is, by converting input AC power to DC power and the DC power back to AC output power), efficiency may be adversely impacted. Furthermore, because the full input AC power may be applied across the switching devices of the PFC 202, the switching devices may be rated to withstand the full input AC power. Accordingly, a cost and/or size of the PFC switching devices may be high.

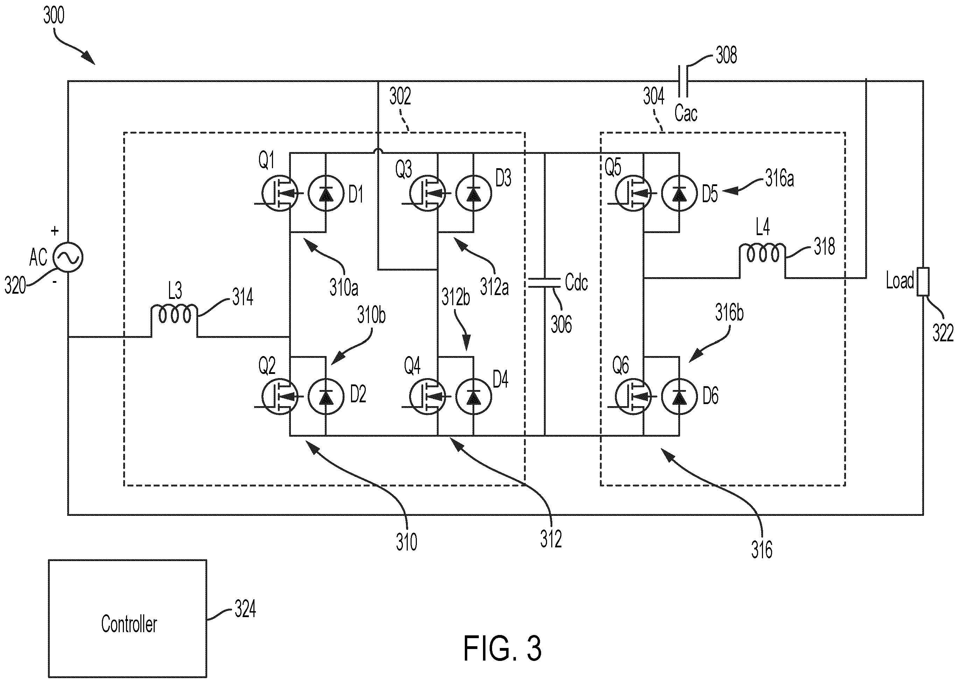

FIG. 3 illustrates a schematic diagram of power-conversion circuitry 300 according to another example. The power-conversion circuitry 300 may be an example of the power-conversion circuitry 128. The power-conversion circuitry 300 includes a PFC 302, an inverter 304, a DC-power capacitor 306, an AC-power capacitor 308. In some examples, the AC-power capacitor 308 may receive AC power or DC power; accordingly, the AC-power capacitor 308 may receive DC power in some examples. The PFC 302 includes a first switching leg 310 having an upper switching device 310a and a lower switching device 310b, a second switching leg 312 having an upper switching device 312a and a lower switching device 312b, and an input inductor 314. The inverter 304 includes the second switching leg 312, a third switching leg 316 having an upper switching device 316a and a lower switching device 316b, and an output inductor 318. As discussed in greater detail below, the second switching leg 312 may be shared between the PFC 302 and the inverter 304, and may therefore be referred to as a "common" switching leg. In some examples, the DC-power capacitor 306 may be considered to be a component of the PFC 302, and/or the AC-power capacitor 308 may be considered to be a component of the inverter 304.

The DC-power capacitor 306 is coupled in parallel with the first switching leg 310, the second switching leg 312, and the third switching leg 316. The AC-power capacitor 308 is coupled to an AC-power source 320, the upper switching device 312a, and the lower switching device 312b at a first connection, and is coupled to the output inductor 318 and one or more loads 322 ("load 322") at a second connection. As discussed in greater detail below, the AC-power capacitor 308 may be considered to be coupled in series between the AC-power source 320 and the load 322. In some examples, the AC-power capacitor 308 may be coupled in parallel with a bypass switch. The bypass switch, when closed by the controller 324, may conduct power received from the AC-power source 320 directly to the load 322, bypassing the power-conversion circuitry 300. For example, the bypass switch may be closed when the power received from the AC-power source 320 is not to be adjusted, conditioned, or supplemented with power from the power-conversion circuitry, and may otherwise remain open.

The upper switching device 310a is coupled to the upper switching device 312a, the DC-power capacitor 306, and the upper switching device 316a at a first connection, is coupled to the input inductor 314 and the lower switching device 310b at a second connection, and is coupled to at least one controller 324 ("controller 324") at a control connection. In various examples, the controller 324 may be an example of the controller 112. In some examples, the controller 324 may be different than the controller 112. The lower switching device 310b is coupled to the upper switching device 310a and the input inductor 314 at a first connection, is coupled to the DC-power capacitor 306, the lower switching device 312b, and the lower switching device 316b at a second connection, and is coupled to the controller 324 at a control connection.

The upper switching device 312a is coupled to the DC-power capacitor 306, the upper switching device 310a, and the upper switching device 316a at a first connection, is coupled to the AC-power capacitor 308, the lower switching device 312b, and the AC-power source 320 at a second connection and is coupled to the controller 324 at a control connection. The lower switching device 312b is coupled to the AC-power capacitor 308, the upper switching device 312a, and the AC-power source 320 at a first connection, is coupled to the DC-power capacitor 306, the lower switching device 310b, and the lower switching device 316b at a second connection and is coupled to the controller 324 at a control connection.

The input inductor 314 is coupled to the AC-power source 320 and the load 322 at a first connection and is coupled to a midpoint of the first switching leg 310 (that is, coupled between the upper switching device 310a and the lower switching device 310b) at a second connection. The upper switching device 316a is coupled to the DC-power capacitor 306, the upper switching device 310a, and the upper switching device 312a at a first connection, is coupled to the lower switching device 316b and the output inductor 318 at a second connection and is coupled to the controller 324 at a control connection. The lower switching device 316b is coupled to the upper switching device 316a and the output inductor 318 at a first connection, is coupled to the DC-power capacitor 306, the lower switching device 310b, and the lower switching device 312b at a second connection and is coupled to the controller 324 at a control connection.

The output inductor 318 is coupled to a midpoint of the third switching leg 316 (that is, coupled to a connection between the upper switching device 316a and the lower switching device 316b) at a first connection, and is coupled to the AC-power capacitor 308 and the load 322 at a second connection. The AC-power source 320 is configured to be coupled to the AC-power capacitor 308, the upper switching device 312a, and the lower switching device 312b at a first connection and is coupled to the input inductor 314 and the load 322 at a second connection. The load 322 is configured to be coupled to the AC-power capacitor 308 and the output inductor 318 at a first connection, and the input inductor 314 and the AC-power source 320 at a second connection. The controller 324 is configured to be communicatively coupled to the switching devices 310a, 310b, 312a, 312b, 316a, and 316b.

The power-conversion circuitry 300 may be configured to be coupled to the AC-power source 320 via a first AC input and a second AC input acting as a power interface between the power-conversion circuitry 300 and the AC-power source 320. The first AC input may be coupled to the AC-power capacitor 308 and a midpoint of the second switching leg 312 (that is, between the switching devices 312a, 312b, and may be configured to be coupled to a first connection of the AC-power source 320. The second AC input may be coupled to the input inductor 314 and may be configured to be coupled to a second connection of the AC-power source 320 and a second connection of the load 322.

Similarly, the power-conversion circuitry 300 may be configured to be coupled to the load 322 via a first AC output and a second AC output acting as a power interface between the power-conversion circuitry 300 and the load 322. The first AC output may be coupled to the AC-power capacitor 308 and the output inductor 318 and may be configured to be coupled to a first connection of the load 322. The second AC output may be configured to be coupled to the second connection of the load 322.

In line-interactive mode, the controller 324 operates the switching legs 310, 312, 316 to provide high-quality power (for example, power with a constant voltage) to the load 322. The controller 324 operates the switching legs 310 and 312 as a bi-directional PFC to provide DC power to, or draw DC power from, the DC-power capacitor 306 to exchange with the AC-power source 320. Thus, although the AC-power source 320 is referred to as a "source" for purposes of explanation, the bi-directional PFC 302 may provide power to the AC-power source 320 in certain circumstances discussed below. The input inductor 314 may act as a high-frequency filter of the bi-directional PFC 302.

The controller 324 further operates the switching legs 312 and 316 as a series-active-filter inverter to draw DC power from the DC-power capacitor 306 and convert the DC power to AC power. The output inductor 318 and the AC-power capacitor 308 may act as an inverter filter for the series-active-filter inverter 304. Accordingly, the second switching leg 312 acts as a common switching leg in as much as the second switching leg 312 is part of both of the bi-directional PFC 302 and the series-active-filter inverter 304. As discussed below, the AC power generated by the inverter 304 is provided to the AC-power capacitor 308 as though connected in series with the AC-power source 320.

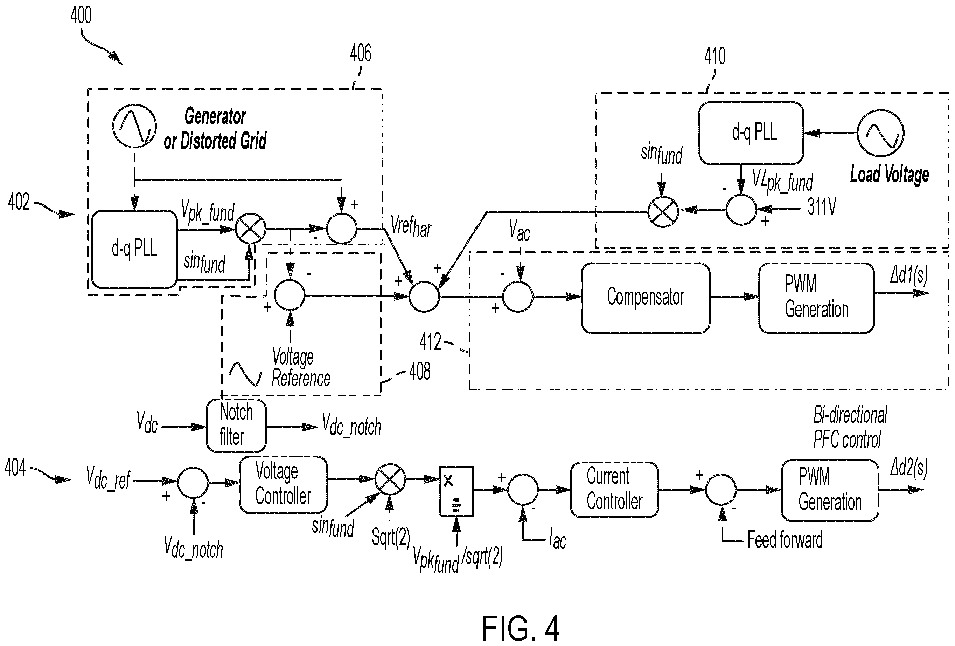

FIG. 4 illustrates a logic block diagram 400 for controlling the switching legs 310, 312, 316 according to an example. The diagram 400 includes an inverter logic block diagram 402 for controlling the switching legs 312, 316 of the inverter 304, and a PFC logic block diagram 404 for controlling the switching legs 310, 312 of the PFC 302 according to an example. The logic block diagram 400 represents logic that might be implemented by, for example, the controller 324. The inverter logic block diagram 402 includes a first input branch 406, a second input branch 408, and a third input branch 410, the outputs of which are summed and provided to an output branch 412. The output branch 412 outputs control signals (for example, pulse-width-modulation [PWM] control signals) to the switching legs 312, 316.

The logic block diagram 400 will be described with respect to an example in which the switching frequency for the switching legs 310, 312, 316 is 100 kHz, and the load 322 draws a load of 3 kW. Furthermore, while the input voltage received from the AC-power source 320 is nominally assumed to be 220 V and 60 Hz, the input voltage may be expected to vary by up to 55 V (that is, between 165 V and 275 V). For purposes of example, the AC-power source 320 may be a generator or a distorted utility grid. As discussed below, the voltage across the AC-power capacitor 308 may be varied by up to 55 V such that a sum of the voltage provided by the AC-power source 320 and the voltage across the AC-power capacitor 308 (the sum being the voltage provided across the load 322) is maintained at 220 V.

At the first input branch 406, sensed voltage information indicative of an input waveform of voltage received from the AC-power source 320 is provided to a d-q phase-locked loop (PLL). The PLL outputs a clean sinusoidal reference signal and a peak value corresponding to the fundamental component of the input waveform. These values are multiplied to obtain a fundamental-frequency waveform from the distorted input waveform. The fundamental-frequency waveform is subtracted from the input waveform, which yields a difference waveform composed of all of the harmonics present in the input waveform. The difference waveform, or reference harmonic signal Vrefₕₐᵣ, is output by the first input branch 406. The fundamental-frequency waveform is also provided to the second input branch 408.

The second input branch 408 receives the fundamental-frequency waveform and a voltage reference. As discussed above, in this example, the voltage reference is a waveform with 220 V and 60 Hz. The fundamental-frequency waveform and the voltage reference waveform are subtracted from one another, and the difference is output by the second input branch 408.

At the third input branch 410, sensed load voltage information indicative of load voltage provided to the load 322 is provided to a d-q PLL. The PLL outputs a peak value corresponding to the fundamental component of the load waveform. The peak value is subtracted from the peak value of the reference voltage (that is, 311 V for a 220 V RMS waveform). The difference is output and multiplied by a clean sinusoidal reference signal. The product is output by the third input branch 410. The third input branch 410 may effectively address a situation in which the UPS in which the power-conversion circuitry 300 is implemented is suddenly loaded from no load to full load, which may cause a drop in voltage across the load 322. The third input branch 410 captures this drop in load voltage to incorporate into control of the switching legs 312, 316.

At the output branch 412, the sum of the input branches 406-410 is received. The sum is subtracted from the AC voltage across the AC-voltage capacitor 308, and the difference is output to a compensator. The compensator compensates for effects such as sampling delays, computational delays, PWM-modulator delays, and so forth. The compensated signal is provided to a PWM-generation block, which generates PWM signals to be provided to the switching legs 312, 316.

In the PFC logic block diagram 404, sensed information indicative of a voltage across the DC-power capacitor 306 V_{dc} is received and applied to a notch filter. The output of the notch filter is subtracted from a reference DC voltage V_{dc_ref}, which may be a target DC voltage for the DC-power capacitor 306, such as 400 V. The difference is provided to a voltage controller, which applies a transfer function to the difference to control the voltage across the DC-power capacitor 306 to be equal to the reference DC voltage. This output is multiplied by the clean sinusoidal reference signal and 1.414. The output is divided by the RMS value of the fundamental component of the input waveform, and the quotient is subtracted from the current through the AC-power capacitor 308. The difference is provided to a current controller, which applies a transfer function to the difference to control the current through the AC-power capacitor 308 to approximate a target current. This output is subtracted from one or more feed-forward signals, and the difference is provided to a PWM-generation block, which generates PWM signals to be provided to the switching legs 310, 312.

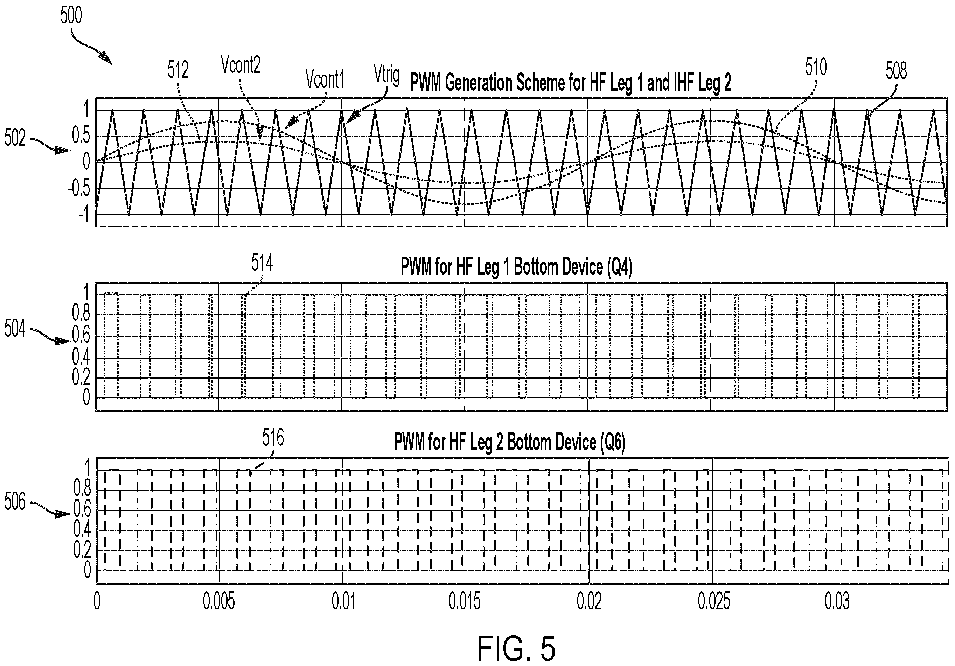

An example of the operation of the PFC 302 and the inverter 304 pursuant to the logic block diagram 400 will be provided for purposes of explanation. FIG. 5 illustrates switching-signal graphs 500 according to an example. The graphs 500 include a first graph 502, a second graph 504, and a third graph 506. The first graph 502 is indicative of modulation indexes for the second switching leg 312 and the third switching leg 316, and includes a carrier-signal trace 508, a first modulation-index trace 510, and a second modulation-index trace 512. The second graph 504 is indicative of PWM signals provided to the lower switching device 312b, and includes a PWM-signal trace 514. The third graph 506 is indicative of PWM signals provided to the lower switching device 316b, and includes a PWM-signal trace 516.

As illustrated by the first graph 502, the carrier-signal trace 508 is a triangular wave oscillating between +1 and -1. The first modulation-index trace 510 is a sinusoidal wave oscillating between +0.8 and -0.8, which represents a modulation index for the control signals provided to the second switching leg 312. The modulation index represents a peak value of the fundamental waveform divided by a DC-bus voltage on the DC-power capacitor 306. The second modulation-index trace 512 is a sinusoidal wave oscillating between +0.4 and -0.4, which represents a modulation index for the control signals provided to the third switching leg 316.

Values of the modulation indexes may be selected to produce a desired range of voltages across the AC-power capacitor 508. In an example in which the DC-bus voltage on the DC-power capacitor 306 is 400 V, then the peak value of the fundamental produced by the second switching leg 312 with a modulation index between +0.8 and -0.8 is approximately 160 V, that is, an RMS value of 113 V. The peak value of the fundamental produced by the third switching leg 316 with a modulation index between +0.4 and -0.4 is approximately 80 V, that is, an RMS value of approximately 57 V. Thus, the RMS output voltage provided by the switching legs 312, 316 of the inverter 304 is a difference between 113 V and 57 V, that is, 56 V. This value may be selected because, as discussed above, the inverter 304 may be controlled to produce up to 55 V across the AC-power capacitor 308. It may therefore be desirable for the inverter 304 to produce at least 55 V.

The values of the modulation indexes may be varied based on the condition of input power received from the AC-power source 320, such as by being based on the voltage of the input power. Varying the magnitudes of the modulation indexes may change a phase of the output voltage provided by the inverter 304 to the AC-power capacitor 308. Thus, changing the magnitudes of the modulation indexes may be used to respond differently to sags and swells in the input power, such as by supplementing the voltage across the AC-power capacitor 308 (for example, in a sag condition) or by reducing the voltage across the AC-power capacitor 308 (for example, in a swell condition).

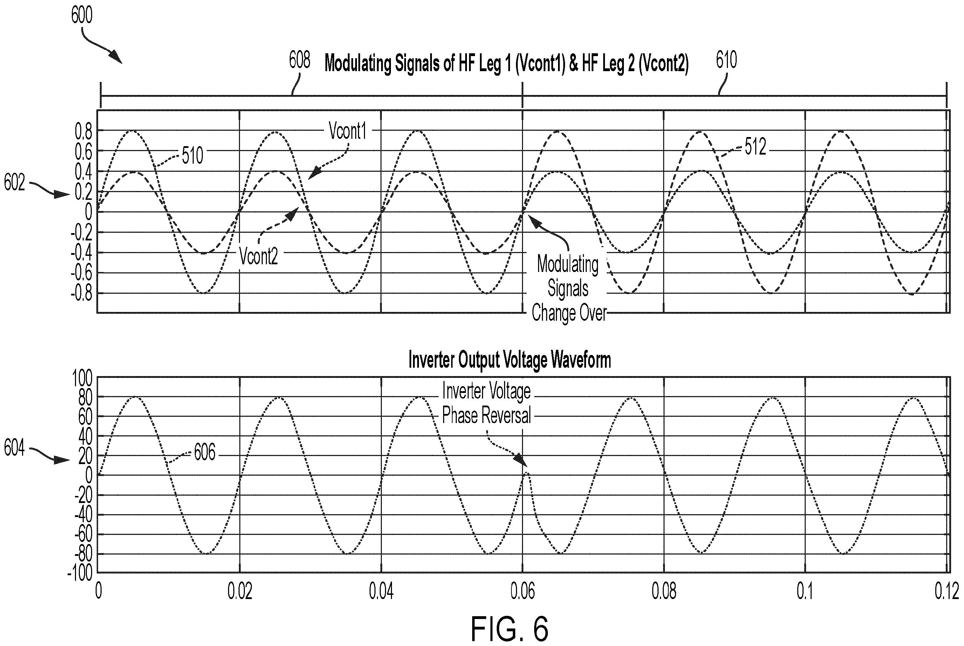

FIG. 6 illustrates graphs 600 depicting a change in modulation-index signals in response to a change in input-voltage conditions according to an example. The graphs 600 include a first graph 602 and a second graph 604. The first graph 602 depicts the first modulation-index trace 510 and the second modulation-index trace 512. The second graph 604 depicts an output waveform output by the inverter 304 to the AC-power capacitor 308 and includes a voltage-waveform trace 606.

For a first period of time 608, the input voltage may be in a sag condition, and the inverter 304 may thus be operated to supplement the voltage across the AC-power capacitor 308. The first modulation-index trace 510 has a peak value of 0.8 and the second modulation-index trace 512 has a peak value of 0.4. As discussed above, and as illustrated by the voltage-waveform trace 606, the inverter 304 outputs a sinusoidal voltage with an RMS value of approximately 56 V (with a peak value of approximately 79 V). Thus, the voltage across the AC-power capacitor 308 is increased to address the sag in the input voltage.

However, at the end of the first period of time 608, the input voltage may transition from a sag to swell condition for a second period of time 610. The inverter 304 may thus be operated to reduce the voltage across the AC-power capacitor 308. At the second period of time 610, the first modulation-index trace 510 is transitioned to have a peak value of 0.4 and the second modulation-index trace 512 is transitioned to have a peak value of 0.8. As illustrated by the voltage-waveform trace 606, the inverter 304 outputs a sinusoidal voltage with an RMS value of approximately 56 V (with a peak value of approximately 79 V), but with an opposite polarity. Thus, the voltage across the AC-power capacitor 308 is decreased to address the swell in the input voltage.

In light of the foregoing, the phase of the output voltage provided by the inverter 304 may be changed simply based on varying the magnitude of the modulation indexes for the PWM signals provided to the switching legs 312, 316, rather than varying the phase of the modulation indexes. This may be advantageous because, as discussed above, the second switching leg 312 is common to the PFC 302 and the inverter 304. Control signals provided to switching devices of the PFC 302, which may include the switching devices 312a and 312b, may be required or desired to have a phase that is in synchronization with the input voltage. Thus, it may not be feasible or desirable to change a phase of signals provided to the second switching leg 312, even to achieve the purposes of the inverter 304. The foregoing control scheme thus enables the second switching leg 312 to act as a common leg between the PFC 302 and the inverter 304, because varying the magnitudes of the modulation-index signals achieves phase reversal of the inverter output waveform without varying the phases of the modulation-index signals, thereby satisfying the requirements or goals of the PFC 302.

Turning to the PFC 302 and the PFC logic block diagram 404, the PFC 302 may be controlled to provide 400 V across the DC-power capacitor 306. Accordingly, the modulation index of the control signals provided to the switching legs 310, 312 may be approximately 0.77, which represents a quotient of the peak value of the target grid value (220 V RMS, 311 V peak) divided by the target DC voltage (400 V).

During a sag condition, the input voltage magnitude may decrease. The magnitude of the voltage provided by the PFC 302 may be decreased by an equal amount by lowering the modulation index of the control signals provided to the switching legs 310, 312. As discussed above, the inverter 304 will draw additional power from the DC-power capacitor 306 during sag to supplement the voltage across the AC-power capacitor 308. The PFC logic block diagram 404 produces a positive error for the voltage across the DC-power capacitor 306. The PFC 302 thus draws active power from the AC-power source 320 to maintain the voltage across the DC-power capacitor 306 at a desired level.

During a swell condition, the input voltage magnitude may increase. The magnitude of the voltage provided by the PFC 302 may be increased by an equal amount by increasing the modulation index of the control signals provided to the switching legs 310, 312. As discussed above, the inverter 304 will draw excess power from the AC-power capacitor 308 during swell to counteract the increase in input voltage, and provide the excess power to the DC-power capacitor 306. The PFC logic block diagram 404 produces a negative error for the voltage across the DC-power capacitor 306. The PFC 302 thus draws excess power from the DC-power capacitor 306 and provides the excess power back to the AC-power source 320 to maintain the voltage across the DC-power capacitor 306 at a desired level.

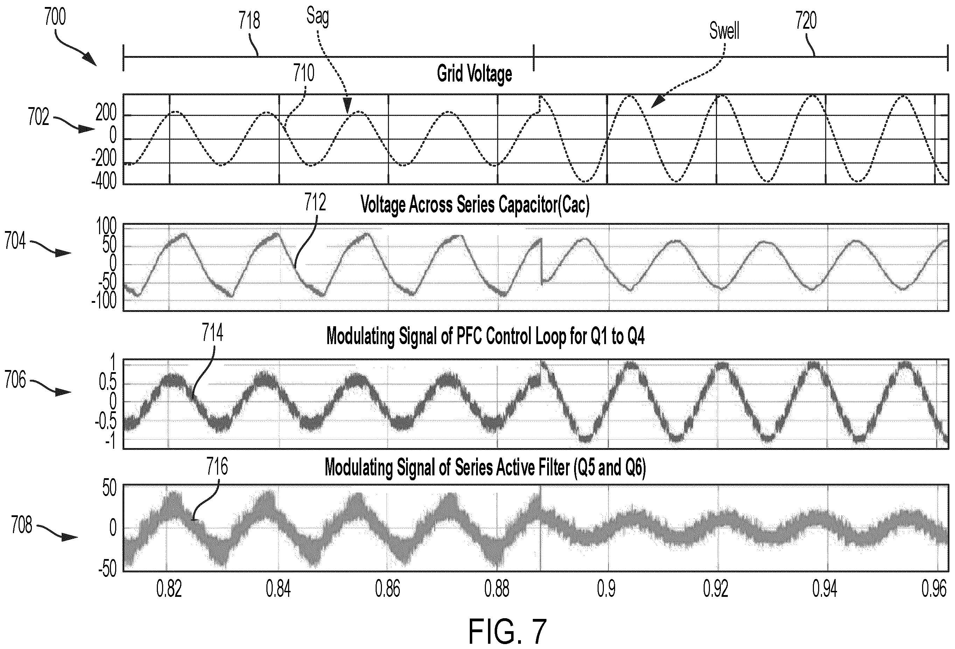

To illustrate an example of the foregoing, FIG. 7 illustrates graphs 700 of control signals provided to the switching legs 310, 312, 316 according to an example. The graphs 700 include a first graph 702, a second graph 704, a third graph 706, and a fourth graph 708. The first graph 702 includes an input-voltage trace 710 depicting a voltage of the input power received from the AC-power source 320. The second graph 704 includes an AC-capacitor-voltage trace 712 depicting a voltage of the AC power across the AC-power capacitor 380. The third graph 706 includes a PFC-control-signal trace 714 depicting modulating signals provided to the switching devices 310a, 310b, 312a, 312b. The fourth graph 708 includes an inverter-control-signal trace 716 depicting modulating signals provided to the switching devices 316a, 316b.

During a first period of time 718, the input voltage is experiencing a sag condition in which the input voltage has a voltage of 165 V RMS, 233 V peak, which is 55 V RMS below a nominal target of 220 V RMS. As indicated by the PFC-control-signal trace 714, the modulation index for the PFC 304 is set to 0.58, that is, the peak value of the input voltage (233 V) divided by the target DC voltage across the DC-power capacitor 306 (400 V). As indicated by the inverter-control-signal trace 716, the modulation indexes for the inverter 302 are increased but remain in synchronization with the PFC-control-signal trace 714 such that a voltage across the AC-power capacitor 308 is increased by approximately 55 V. Thus, the voltage provided to the load 322 remains 220 V RMS even though the input voltage is approximately 165 V RMS.

During a second period of time 720, the input voltage transitions from experiencing a sag condition to experiencing a swell condition in which the input voltage has a voltage of 264 V RMS, 313 V peak, which is 44 V RMS above a nominal target of 220 V RMS. As indicated by the PFC-control-signal trace 714, the modulation index for the PFC 304 is set to 0.93, that is, the peak value of the input voltage (373 V) divided by the target DC voltage across the DC-power capacitor 306 (400 V). As indicated by the inverter-control-signal trace 716, the modulation indexes for the inverter 302 are decreased but remain in synchronization with the PFC-control-signal trace 714 such that a voltage across the AC-power capacitor 308 is decreased by approximately 44 V. Thus, the voltage provided to the load 322 remains 220 V RMS even though the input voltage is approximately 264 V RMS.

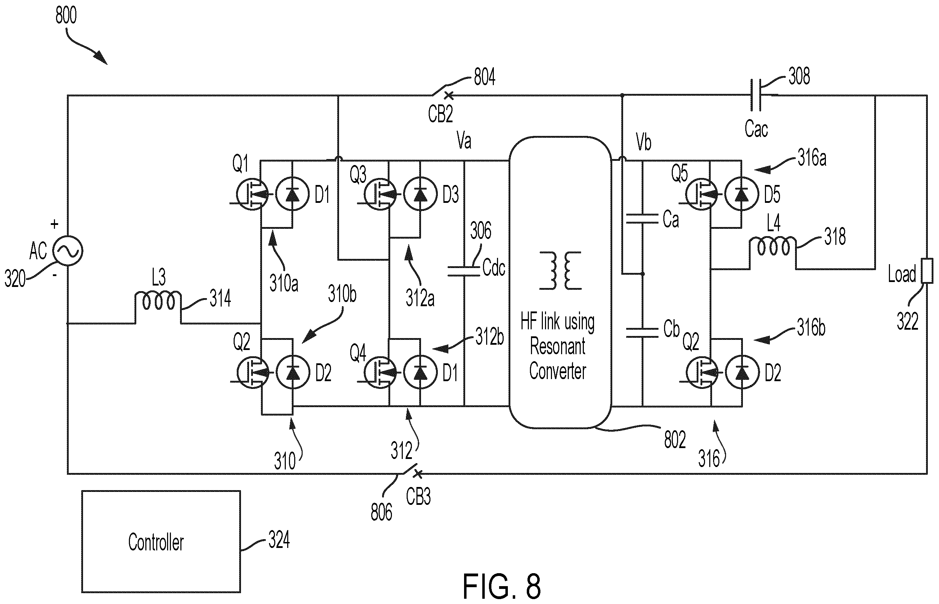

Modifications to the power-conversion circuitry 300 are within the scope of this disclosure. For example, FIG. 8 illustrates a schematic diagram 800 of power-conversion circuitry 800 according to an example. The power-conversion circuitry 800 is similar to the power-conversion circuitry 300, and like components are labeled accordingly. The power-conversion circuitry 800 also includes a high-frequency step-down transformer 802 coupled in parallel with and between the second switching leg 312 and the third switching leg 316, a first switching device 804 coupled between the AC-power source 320 and the AC-power capacitor 308, and a second switching device 806 coupled between the load 322 and the AC-power source 320.

The transformer 802 may be used to step down a voltage across the DC-power capacitor 306 to provide a stepped-down voltage across the third switching leg 316. The switching devices 316a, 316b are therefore subjected to smaller voltage values and may be designed to be smaller (that is, designed to withstand a lower voltage) depending on a degree to which the voltage is stepped down. Furthermore, the switching devices 804, 806 may be opened (for example, responsive to control signals from the controller 324) as an alternative to the transformer 802 with a load connected across the AC-power capacitor 308. In some examples, the transformer 802 may be implemented with additional secondary windings to act as an energy-storage-device-charging interface.

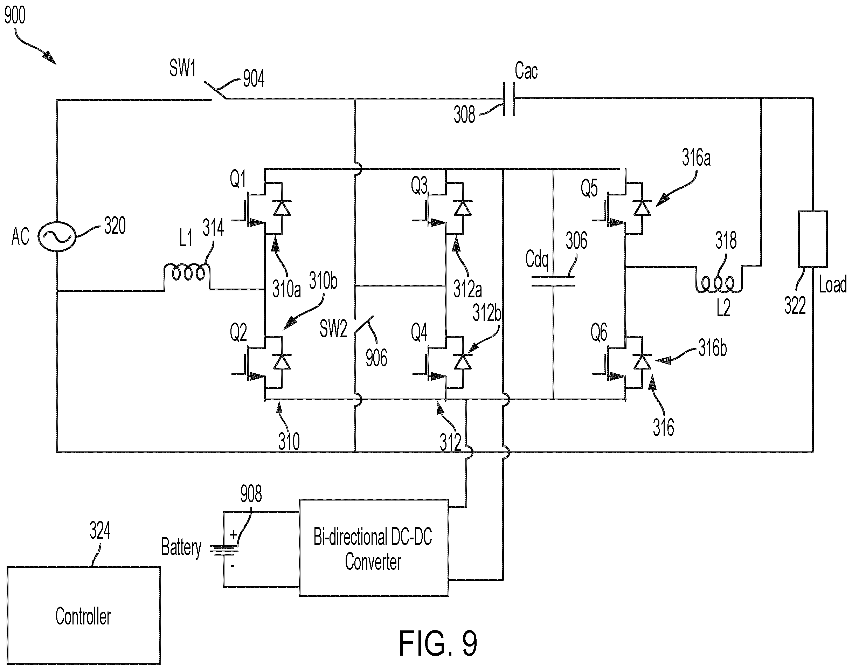

FIG. 9 illustrates a schematic diagram 900 of power-conversion circuitry 900 according to another example. The power-conversion circuitry 900 is similar to the power-conversion circuitry 300, and like components are labeled accordingly. The power-conversion circuitry 900 also includes a bi-directional DC/DC converter 902 (which may be an example of the DC/DC converter 108), a first switching device 904, and a second switching device 906.

The converter 902 is coupled to the upper switching devices 310a, 312a, 316a at a first connection, is coupled to the lower switching devices 310b, 312b, 316b at a second connection, and is coupled to an energy-storage device 908 (which may be an example of the energy-storage device 126) at a third and fourth connection. The first switching device 904 is coupled to the AC-power source 320 at a first connection, and is coupled to the AC-power capacitor 308, the switching devices 312a, 312b, and the second switching device 906 at a second connection. The second switching device 906 is coupled to the AC-power capacitor 308, the switching devices 312a, 312b, and the first switching device 904 at a first connection, and is coupled to the AC-power source 320 and the load 322 at a second connection.

The controller 324 may operate the first switching device 904 to open and thereby decouple the power-conversion circuitry 900 from the AC-power source 320 in response to failure of the AC-power source 320. The controller 324 may also close the second switching device 906 to connect the AC-power capacitor 308 to a neutral line during the power failure, thereby forming a low-pass filter at the output of the inverter 304. The controller 324 may further control the converter 902 to draw power from the energy-storage device 908 and provide power to the DC-power capacitor 306 such that the inverter 304 may remain in operation during the power failure. When power is available from the AC-power source 320, the controller 324 may close the first switching device 904, open the second switching device 906, and operate the converter 902 to recharge the energy-storage device 908.

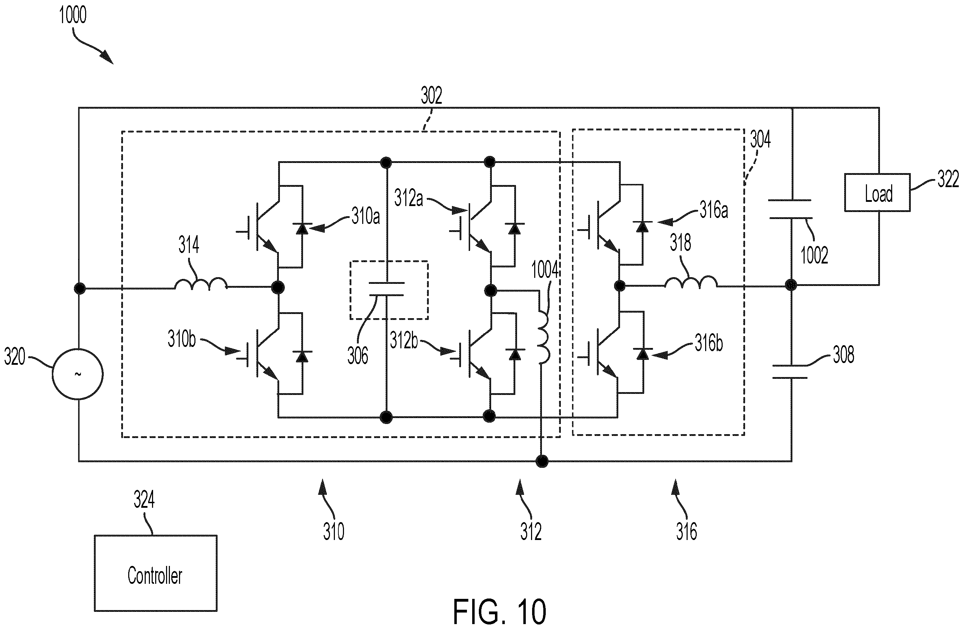

FIG. 10 illustrates a schematic diagram 1000 of power-conversion circuitry 1000 according to another example. The power-conversion circuitry 10000 is similar to the power-conversion circuitry 300, and like components are labeled accordingly. The power-conversion circuitry 1000 also includes a load capacitor 1002 and a common inductor 1004. The load capacitor 1002 is coupled in parallel with the load 322. The common inductor 1004 includes a first connection coupled to a midpoint between the switching devices 312a, 312b, and a second connection coupled to the AC-power source 320 and the AC-power capacitor 308. In some examples, the power-conversion circuitry 1000 may include additional components not illustrated in FIG. 10, such as a bypass switch coupled in parallel with the AC-power capacitor 308.

Moreover, some connections of the power-conversion circuitry 1000 differ from those of the power-conversion circuitry 3000. For example, the input inductor 314 is configured to be coupled to a positive connection of the AC-power source 320 rather than a negative connection thereof. Furthermore, rather than a midpoint between the switching devices 312a, 312b being coupled to a point between the positive connection of the AC-power source 320 and the AC-power capacitor 308, the midpoint between the switching devices 312a, 312b is coupled, via the common inductor 1004, to a point between the negative connection of the AC-power source 320 and the AC-power capacitor 308. The AC-power capacitor 308, rather than being coupled between a positive terminal of the AC-power source 320 and the load 322, is coupled between a negative terminal of the AC-power source 320 and the load 322.

The power-conversion circuitry 1000 is configured to interact with power provided by the AC-power source 320 to the load 322 in a similar manner as the power-conversion circuitry 300, that is, by modulating a voltage across the AC-power capacitor 308. For example, if a voltage of the AC-power source 320 exceeds a voltage that should be provided to the load 322 (that is, the input voltage is too high), then a negative voltage (relative to the voltage provided by the AC-power source 320) may be produced across the AC-power capacitor 308. If a voltage of the AC-power source 320 is less than a voltage that should be provided to the load 322 (that is, the input voltage is too low), then a positive voltage (relative to the voltage provided by the AC-power source 320) may be produced across the AC-power capacitor 308. In various examples, the controller 324 may operate the second switching leg 312 and the third switching leg 316 in at least four states throughout a complete AC cycle of the power provided by the AC-power source 320 for both a situation in which the load voltage is too high and too low.

For example, consider an example in which the input voltage received from the AC-power source 320 is too low. During a positive half-cycle, the controller 324 may control the switching legs 312, 316 to switch between two states in some control schemes.

In a first state, the upper switching devices 312a, 316a are open, and the lower switching devices 312b, 316b are closed. Current from the AC-power source 320 passes through the load 322, the output inductor 318, the lower switching device 316b, the lower switching device 312b, and the common inductor 1004, back to the AC-power source 320. The voltage across the load 322 is thus approximately equal to the voltage of the AC-power source 320. As noted above, the voltage of the AC-power source 320 may be less than a voltage that should be provided to the load 322.

In a second state, the upper switching device 312a and the lower switching device 316b are closed, and the lower switching device 312b and the upper switching device 316a are open. Current from the AC-power source 320 passes through the load 322, the output inductor 318, the lower switching device 316b, the DC-power capacitor 306, the upper switching device 312a, and the common inductor 1004, back to the AC-power source 320. The voltage across the load 322 is thus approximately equal to the voltage of the AC-power source 320 plus the voltage of the DC-power capacitor 306. The sum of the voltage of the AC-power source 320 plus the voltage of the DC-power capacitor 306 may exceed a voltage that should be provided to the load 322.

Accordingly, the controller 324 may control the switching legs 312, 316 to alternate between these two states to provide a desired average voltage to the load 322. A switching frequency between the two states and/or duty cycle of each state may depend on a value of the input voltage, with the controller 324 controlling the switching legs 312, 316 to be in the second state more when the input voltage is lower.

The example above may include a situation in which the input voltage received from the AC-power source 320 is too low during a positive half-cycle. During a negative half-cycle, the controller 324 may control the switching legs 312, 316 to switch between two states in some control schemes.

In a first state, the upper switching devices 312a, 316a are closed, and the lower switching devices 312b, 316b are open. Current from the AC-power source 320 passes through the common inductor 1004, the upper switching device 312a, the upper switching device 316a, the output inductor 318, the load 322, and back to the AC-power source 320. The voltage across the load 322 is thus approximately equal to the voltage of the AC-power source 320. As noted above, the voltage of the AC-power source 320 may be less than a voltage that should be provided to the load 322.

In a second state, the upper switching device 312a and the lower switching device 316b are open, and the lower switching device 312b and the upper switching device 316a are closed. Current from the AC-power source 320 passes through the common inductor 1004, the lower switching device 312b, the DC-power capacitor 306, the upper switching device 316a, the output inductor 318, the load 322, and back to the AC-power source 320. The voltage across the load 322 is thus approximately equal to the voltage of the AC-power source 320 plus the voltage of the DC-power capacitor 306. The sum of the voltage of the AC-power source 320 plus the voltage of the DC-power capacitor 306 may exceed a voltage that should be provided to the load 322.

Accordingly, the controller 324 may control the switching legs 312, 316 to alternate between these two states to provide a desired average voltage to the load 322. A switching frequency between the two states may depend on a value of the input voltage, with the controller 324 controlling the switching legs 312, 316 to be in the second state more when the input voltage is lower.

As noted above, when the input voltage is too low, the third switching devices 316a, 316b maintain their respective states for each half-cycle and switch at the zero-crossing of the input power. Conversely, the second switching devices 312a, 312b change states multiple times within each half-cycle. Accordingly, when the input voltage is too low, the third switching devices 316a, 316b may be considered low-frequency switches and the second switching devices 312a, 312b may be considered high-frequency switches.

The examples above may include a situation in which the input voltage received from the AC-power source 320 is too low. In another example, the input voltage received from the AC-power source 320 may be too high. During a positive half-cycle, the controller 324 may control the switching legs 312, 316 to switch between two states in some control schemes.

In a first state, the upper switching devices 312a, 316a are open, and the lower switching devices 312b, 316b are closed. Current from the AC-power source 320 passes through the load 322, the output inductor 318, the lower switching device 316b, the lower switching device 312b, and the common inductor 1004, back to the AC-power source 320. The voltage across the load 322 is thus approximately equal to the voltage of the AC-power source 320. As noted above, the voltage of the AC-power source 320 may be greater than a voltage that should be provided to the load 322.

In a second state, the upper switching device 312a and the lower switching device 316b are open, and the lower switching device 312b and the upper switching device 316a are closed. Current from the AC-power source 320 passes through the load 322, the output inductor 318, the upper switching device 316a, the DC-power capacitor 306, the lower switching device 312b, and the common inductor 1004, back to the AC-power source 320. The voltage across the load 322 is thus approximately equal to the voltage of the AC-power source 320 minus the voltage of the DC-power capacitor 306. The difference of the voltage of the AC-power source 320 minus the voltage of the DC-power capacitor 306 may be less than a voltage that should be provided to the load 322.

Accordingly, the controller 324 may control the switching legs 312, 316 to alternate between these two states to provide a desired voltage to the load 322. A switching frequency and/or duty cycle between the two states may depend on a value of the input voltage, with the controller 324 controlling the switching legs 312, 316 to be in the second state more when the input voltage is higher.

The example above may include a situation in which the input voltage received from the AC-power source 320 is too high during a positive half-cycle. During a negative half-cycle, the controller 324 may control the switching legs 312, 316 to switch between two states in some control schemes.

In a first state, the upper switching devices 312a, 316a are closed, and the lower switching devices 312b, 316b are open. Current from the AC-power source 320 passes through the common inductor 1004, the upper switching device 312a, the upper switching device 316a, the output inductor 318, the load 322, and back to the AC-power source 320. The voltage across the load 322 is thus approximately equal to the voltage of the AC-power source 320. As noted above, the voltage of the AC-power source 320 may be higher than a voltage that should be provided to the load 322.

In a second state, the upper switching device 312a and the lower switching device 316b are closed, and the lower switching device 312b and the upper switching device 316a are open. Current from the AC-power source 320 passes through the common inductor 1004, the upper switching device 312a, the DC-power capacitor 306, the lower switching device 316b, the output inductor 318, the load 322, and back to the AC-power source 320. The voltage across the load 322 is thus approximately equal to the voltage of the AC-power source 320 minus the voltage of the DC-power capacitor 306. The difference of the voltage of the AC-power source 320 minus the voltage of the DC-power capacitor 306 may be less than a voltage that should be provided to the load 322.

Accordingly, the controller 324 may control the switching legs 312, 316 to alternate between these two states to provide a desired voltage to the load 322. A switching frequency and/or duty cycle between the two states may depend on a value of the input voltage, with the controller 324 controlling the switching legs 312, 316 to be in the second state more when the input voltage is higher.

As noted above, when the input voltage is too high, the second switching devices 312a, 312b maintain their respective states for each half-cycle and switch at the zero-crossing of the input power. Conversely, the third switching devices 316a, 316b change states multiple times within each half-cycle. Accordingly, when the input voltage is too high, the second switching devices 312a, 312b may be considered low-frequency switches and the third switching devices 316a, 316b may be considered high-frequency switches.

In various examples, the controller 324 of any of the foregoing examples of the power-conversion circuitry 300, 800, 900, 1000 may operate the first switching leg 310 and the second leg 312 as a fast charger (for example, a power-factor-corrected fast charger) for a corresponding energy-storage device (not illustrated) coupled across the DC-power capacitor 306. As discussed above, in various examples only a small amount of the power provided by the AC-power source 320 to the load 322 may be provided to the power-conversion circuitry 128. Accordingly, the first switching leg 310 may draw a large amount of power to be provided to an energy-storage device to recharge the energy storage device since only a small amount of the rated capacity of the first switching leg 310 is being used at any given time to condition power for the load 322.

Various controllers, such as the controller 324, may execute various operations discussed above. Using data stored in associated memory and/or storage, the controller 324 also executes one or more instructions stored on one or more non-transitory computer-readable media, which the controller 324 may include and/or be coupled to, that may result in manipulated data. In some examples, the controller 324 may include one or more processors or other types of controllers. In one example, the controller 324 is or includes at least one processor. In another example, the controller 324 performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Further examples are provided in the following clauses.

Clause 1. A power-conditioning system comprising:
a load output configured to be coupled to a load;
a power-factor-correction circuit (PFC) comprising a first switching leg and a second switching leg, wherein the first switching leg and the second switching leg are configured to be controlled based on a first modulation index;
an inverter comprising the second switching leg and a third switching leg, wherein the third switching leg is configured to be controlled based on a second modulation index; and
a capacitor coupled to an inverter output of the inverter and being coupled in series with the load output.

Clause 2. The system of clause 1, wherein the first modulation index is different than the second modulation index.

Clause 3. The system of clause 1, further comprising at least one controller coupled to the PFC and the inverter.

Clause 4. The system of clause 3, wherein the at least one controller is configured to modify at least one of the first modulation index or the second modulation index to modify an output AC voltage output by the inverter.

Clause 5. The system of clause 4, wherein modifying a value of the at least one of the first modulation index or the second modulation index modifies a phase of the output AC voltage.

Clause 6. The system of clause 1, further comprising a first AC input and a second AC input.

Clause 7. The system of clause 6, wherein the first AC input is coupled to the capacitor and to a midpoint of the second switching leg.

Clause 8. The system of clause 6, further comprising an inductor having a first connection coupled to the second AC input and a second connection coupled to a midpoint of the first switching leg.

Clause 9. The system of clause 1, further comprising an inductor having a first connection coupled to the load output and a second connection coupled to a midpoint of the third switching leg.

Clause 10. The system of clause 1, wherein the capacitor is coupled in parallel with the inverter.

Clause 11. A method of operating a load-conditioning system comprising a load output configured to be coupled to a load, a power-factor-correction circuit (PFC) comprising a first switching leg and a second switching leg, an inverter comprising the second switching leg and a third switching leg, and a capacitor coupled to an inverter output of the inverter and being coupled in series with the load output, the method comprising:
controlling the first switching leg and the second switching leg based on a first modulation index;
controlling the third switching leg based on a second modulation index; and
providing, by the inverter, an output AC voltage to the capacitor based on the first modulation index and the second modulation index.

Clause 12. The method of clause 11, wherein the first modulation index is different than the second modulation index.

Clause 13. The method of clause 11, further comprising modifying at least one of the first modulation index or the second modulation index to modify the output AC voltage.

Clause 14. The method of clause 13, wherein modifying a value of the at least one of the first modulation index or the second modulation index modifies a phase of the output AC voltage.

Clause 15. The method of clause 11, further comprising receiving, from an input coupled in series with the capacitor, an input AC voltage.

Clause 16. The method of clause 15, wherein providing the output AC voltage to the capacitor includes generating a differential voltage across the capacitor, the output AC voltage being in-phase with the input AC voltage.

Clause 17. The method of clause 15, further comprising providing, by the capacitor, a load AC voltage to the load, wherein the load AC voltage is a sum of the input AC voltage and the output AC voltage.

Clause 18. The method of clause 17, further comprising selecting at least one of the first modulation index and the second modulation index to maintain the load AC voltage at a desired level.

Clause 19. A non-transitory computer-readable medium storing thereon sequences of computer-executable instructions for operating a load-conditioning system comprising a load output configured to be coupled to a load, a power-factor-correction circuit (PFC) comprising a first switching leg and a second switching leg, an inverter comprising the second switching leg and a third switching leg, and a capacitor coupled to an inverter output of the inverter and being coupled in series with the load output, the sequences of computer-executable instructions including instructions that instruct at least one processor to:
control the first switching leg and the second switching leg based on a first modulation index;
control the third switching leg based on a second modulation index; and
provide, by the inverter, an output AC voltage to the capacitor based on the first modulation index and the second modulation index.

Clause 20. The non-transitory computer-readable medium of clause 19, wherein the instructions further instruct the at least one processor to modify at least one of the first modulation index or the second modulation index to modify the output AC voltage.

Clause 21. A power-conditioning system comprising:
a load output configured to be coupled to a load;
a power-factor-correction circuit (PFC) comprising a first switching leg and a second switching leg, wherein the first switching leg and the second switching leg are configured to be controlled based on a first switching frequency;
an inverter comprising the second switching leg and a third switching leg, wherein the third switching leg is configured to be controlled based on a second switching frequency; and
a capacitor coupled to an inverter output of the inverter and being coupled in series with the load output.

Having thus described several aspects of at least one embodiment, it is to be appreciated various alterations, modifications, and improvements will readily occur to those skilled in the art. Such alterations, modifications, and improvements are intended to be part of, and within the scope of, this disclosure. Accordingly, the foregoing description and drawings are by way of example only.

## Claims

1. A power-conditioning system comprising:
a load output configured to be coupled to a load;
a power-factor-correction circuit (PFC) comprising a first switching leg and a second switching leg, wherein the first switching leg and the second switching leg are configured to be controlled based on a first modulation index;
an inverter comprising the second switching leg and a third switching leg, wherein the third switching leg is configured to be controlled based on a second modulation index; and
a capacitor coupled to an inverter output of the inverter and being coupled in series with the load output.

2. The system of claim 1, further comprising at least one controller coupled to the PFC and the inverter.

3. The system of claim 2, wherein the at least one controller is configured to modify at least one of the first modulation index or the second modulation index to modify an output AC voltage output by the inverter.

4. The system of claim 3, wherein modifying a value of the at least one of the first modulation index or the second modulation index modifies a phase of the output AC voltage.

5. The system of any of the above claims, further comprising a first AC input and a second AC input.

6. The system of claim 5, wherein the first AC input is coupled to the capacitor and to a midpoint of the second switching leg.

7. The system of claims 5 or 6, further comprising an inductor having a first connection coupled to the second AC input and a second connection coupled to a midpoint of the first switching leg.

8. The system of any of the above claims, further comprising an inductor having a first connection coupled to the load output and a second connection coupled to a midpoint of the third switching leg.

9. A method of operating a load-conditioning system comprising a load output configured to be coupled to a load, a power-factor-correction circuit (PFC) comprising a first switching leg and a second switching leg, an inverter comprising the second switching leg and a third switching leg, and a capacitor coupled to an inverter output of the inverter and being coupled in series with the load output, the method comprising:
controlling the first switching leg and the second switching leg based on a first modulation index;
controlling the third switching leg based on a second modulation index; and
providing, by the inverter, an output AC voltage to the capacitor based on the first modulation index and the second modulation index.

10. The method of claim 9, further comprising modifying at least one of the first modulation index or the second modulation index to modify the output AC voltage.

11. The method of claim 10, wherein modifying a value of the at least one of the first modulation index or the second modulation index modifies a phase of the output AC voltage.

12. The method of any of the claims 9 to 11, further comprising receiving, from an input coupled in series with the capacitor, an input AC voltage.

13. The method of claim 12, wherein providing the output AC voltage to the capacitor includes generating a differential voltage across the capacitor, the output AC voltage being in-phase with the input AC voltage.

14. The method of claim 12, further comprising providing, by the capacitor, a load AC voltage to the load, wherein the load AC voltage is a sum of the input AC voltage and the output AC voltage.

15. A non-transitory computer-readable medium storing thereon sequences of computer-executable instructions for operating a load-conditioning system comprising a load output configured to be coupled to a load, a power-factor-correction circuit (PFC) comprising a first switching leg and a second switching leg, an inverter comprising the second switching leg and a third switching leg, and a capacitor coupled to an inverter output of the inverter and being coupled in series with the load output, the sequences of computer-executable instructions including instructions that instruct at least one processor to:
control the first switching leg and the second switching leg based on a first modulation index;
control the third switching leg based on a second modulation index; and
provide, by the inverter, an output AC voltage to the capacitor based on the first modulation index and the second modulation index.
